# EUROPEAN PATENT SPECIFICATION

(11) **EP 2 330 705 B1**
(45) Date of publication and mention of the grant of the patent: **30.10.2013**
(21) Application number: 08877133.2
(22) Date of filing: 30.09.2008
(51) Int. Cl.: H02G 15/007, H02G 15/013, H02G 15/076, H02G 15/117, H02G 3/30

(54) **WIRE HOLDER AND WIRE BUNDLING STRUCTURE**
DRAHTHALTER UND DRAHTBÜNDELUNGSSTRUKTUR
PORTE-FIL ET STRUCTURE DE FORMATION DE FAISCEAU DE FILS

(43) Date of publication of application: 08.06.2011
(73) Proprietor: Toshiba Mitsubishi-Electric Industrial Systems Corporation, Minato-ku Tokyo 108-0073 (JP)
(72) Inventor: KOGA, Toshiro, Tokyo 108-0073 (JP)
(74) Representative: Piotrowicz, Pawel Jan Andrzej
(86) International application number: PCT/JP2008/067726
(87) International publication number: WO 2010/038269

(56) References cited:
- JP-A- 2001 327 053
- JP-A- 2004 048 972
- JP-U- 2 053 588
- JP-U- 4 131 132
- US-A- 5 027 478
- US-A- 5 742 982
- US-A1- 2003 173 470
- US-A1- 2004 050 583

## Description

### TECHNICAL FIELD

The present invention relates to a wire holder and a wire bundling structure, in particular, to a holder for high-voltage wires used in a power converter or the like and a bundling structure thereof.

### BACKGROUND ART

Conventionally, a spacer for inserting and installing a multiplicity of cables in one installed pipe is disclosed in, for example, Japanese Patent Laying-Open No. 2003-284216 (Patent Document 1).
Patent Document 1: Japanese Patent Laying-Open No. 2003-284216

JP 2001327053 A describes a cable supporter used for laying cables provided with a supporter body, which has a plurality of cable engaging grooves in its peripheral part.

US 2003/0173470 A1 describes a conduit isolator mount for separating and securing one or more elongate articles. In one embodiment the isolator may be used by itself to secure one or more elongate articles in relative position.

US 2004/0050583 A1 describes a wire separator capable of maintaining wires in a fixed bundle. The wire separator comprises an inner member having a plurality of apertures into which wires may be positioned via a plurality of gaps in the inner member.

US 5 742 982 A describes a clamp assembly. A flexible insert having a plurality of cylindrical cavities opening through the outer surface thereof can receive a number of cables to be clamped in the clamp assembly for strain relief.

US 5 027 478 A describes a coiling clamp for linear flexible material formed as a unitary plastic, metal or wooden body member having circumferentially spaced outwardly opening receiving recesses which may be of different sizes to receive different sizes of the linear material such as garden hose, electrical extension cords, water-ski ropes and the like.

### DISCLOSURE OF THE INVENTION

### PROBLEMS TO BE SOLVED BY THE INVENTION

In a snubber circuit wire of a main thyristor element in a power converter, each wire's inductance, which is one factor of generating a surge voltage, needs to be small in order to suppress the surge voltage. Conventionally, to achieve a small inductance, wires different in directions in which currents flow in the snubber circuit have been bundled to one another.

In bundling such snubber circuit wires, their coatings need to be prevented from being damaged, so as not to compromise insulating strength for high voltage. In view of this, conventionally, a glass tape is wound around a bundling portion of each of the wires for protection, and these wires are then bundled by a commercially available bundling band. As such, a large number of process steps are required in bundling the wires, with the result that operation efficiency is hardly improved in wiring operations for a power converter, disadvantageously.

The present invention is made in view of the foregoing problem, and its main object is to provide a wire holder and a wire bundling structure, each of which allows for reduced number of process steps required in bundling wires.

### MEANS FOR SOLVING THE PROBLEMS

A wire holder according to the present invention is a wire holder for relative alignment of a plurality of wires upon bundling the wires, and includes a plurality of wall portions. The wall portions are formed rotationally symmetric to one another, provided to project in a direction orthogonal to a rotation symmetry axis, and extend along the rotation symmetry axis. Between opposite ones of the wall portions, recesses having arc shapes in cross section are formed to hold the wires. Each of the recesses has a span length of not less than 85% of a diameter of each of the wires. The wires can be aligned by fitting the wires into the recesses and arranging the wires along the rotation symmetry axis. Each of the wall portions has a wall thickness of not more than 1/2 of a radius of each of the arc shapes in the recesses, at its portion intersecting with a straight line connecting centers of the arc shapes of two adjacent ones of the recesses.

Here, the term "rotational symmetry" indicates types of symmetry characterizing figural objects. A property called "n-fold rotational symmetry", "rotational symmetry of order n", "(360/n) symmetry", or the like is such that when a figural object is rotated around a center (in the case of a two-dimensional figural object) or an axis (in the case of a three-dimensional figural object) by (360/n), the figural object overlaps with itself, where n is an integer equal to or greater than 2. For example, with n = 3, the figural object overlaps with itself when the figural object is rotated by 120°, which means threefold rotational symmetry. The term "rotation symmetry axis" refers to an axis that serves as the center of rotation when a rotationally symmetric three-dimensional figural object is rotated to overlap with itself. Namely, when a figural object is rotated around the rotation symmetry axis by (360/n), the figural object thus rotated coincides with the figural object in its initial location.

Meanwhile, the term "arc shape in cross section" indicates that when a member is viewed in cross section along a predetermined cross sectional line, the member is formed to have its sectional shape forming a shape of arc. Further, the term "span length" refers to a line segment with a minimum length among line segments formed by trimming lines, which pass through the barycenter of a figural object, with the contour shape of the figural object, such as the length of the diameter of a circle and the length of a side of a square. In the present specification, the length of a line segment connecting the opposite ends of an opening in the cross section of each recess having the arc shape in cross section (i.e., a distance of a straight line between the opposite ends of the arc) is referred to as the span length of the recess.

In the wire holder, the recesses may be formed to have the arc shapes in cross section with an arc angle of not less than 150° and not more than 210°. Here, the term "arc angle" refers to an angle formed by two intersecting line segments that connect the center of the arc and the two end portions of the arc.

In the wire holder, each of the wall portions may have a wall thickness of about 1/4 of a radius of each of the arc shapes in the recesses, at its portion intersecting with a straight line connecting centers of the arc shapes of two adjacent ones of the recesses.

The wire bundling structure according to the present invention includes: the wire holder in any one of the above-described aspects; the plurality of wires fit into the recesses; and a band-shaped bundling device, provided to be wound around the wire holder in contact with tip portions of the plurality of wall portions, for bundling the wires.

### EFFECTS OF THE INVENTION

According to the wire holder and the wire bundling structure of the present invention, an operation of winding a glass tape around each one of the wires can be eliminated upon bundling the plurality of wires. Accordingly, the number of process steps required in bundling the wires can be reduced drastically.

### BRIEF DESCRIPTION OF THE DRAWINGS

Fig. 1 is a perspective view showing a wire holder of a first embodiment.
Fig. 2 is a front view of the wire holder shown in Fig. 1.
Fig. 3 is a side view of the wire holder shown in Fig. 1.
Fig. 4 is a perspective view showing a first process for bundling wires using the wire holder.
Fig. 5 is a perspective view showing a second process for bundling the wires using the wire holder.
Fig. 6 is a perspective view showing a third process for bundling the wires using the wire holder.
Fig. 7 is a perspective view showing a wire holder of a second embodiment.
Fig. 8 is a front view of the wire holder shown in Fig. 7.

### DESCRIPTION OF THE REFERENCE SIGNS

1, 101: wire holder; 11, 21, 31, 111, 121, 131, 141: wall portion; 12, 22, 32: thick portion; 13, 23, 33, 143: thin portion; 14, 24, 34: tip portion; 15: base; 41, 51, 61, 151, 161, 171, 181: recess; 42, 52, 62, 152, 162, 172, 182: arc portion; 43, 44, 53, 54, 153, 154, 163, 164: opening end portion; 90: wire; 91: electrically conductive portion; 92: insulating portion; 99: bundling device; C: central point; L: span length; O: axis; r: radius; t: wall thickness; θ: arc angle.

### BEST MODES FOR CARRYING OUT THE INVENTION

The following describes embodiments of the present invention, with reference to figures. It should be noted that in the figures described below, the same or corresponding portions are given the same reference characters and are not described repeatedly.

It should be also noted that in the embodiments described below, each component is not necessarily essential for the present invention unless otherwise noted. In addition, in the embodiments described below, when the number, an amount, and the like are described, they are merely illustrative and the scope of the present invention is not necessarily limited to the number, the amount, and the like, unless otherwise noted.

### (First Embodiment)

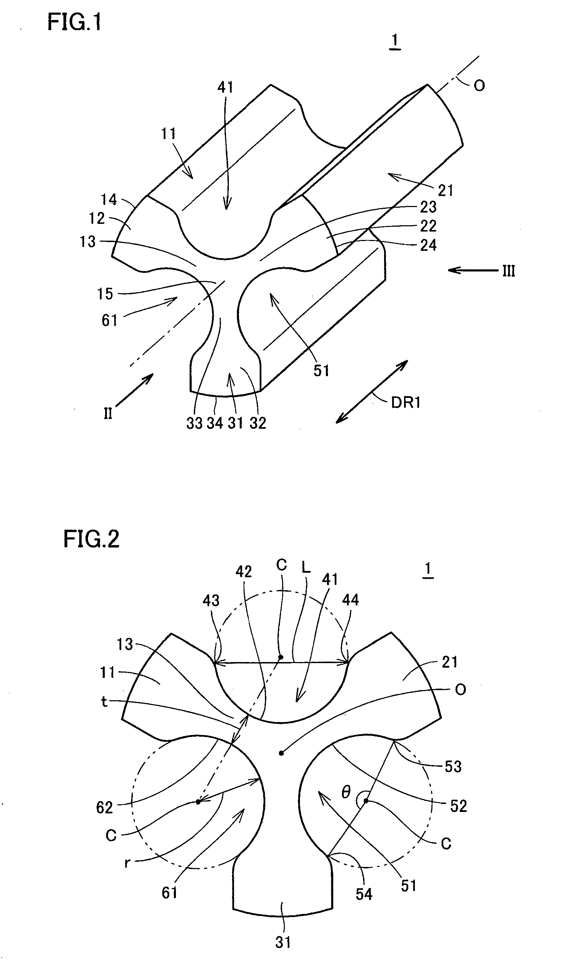

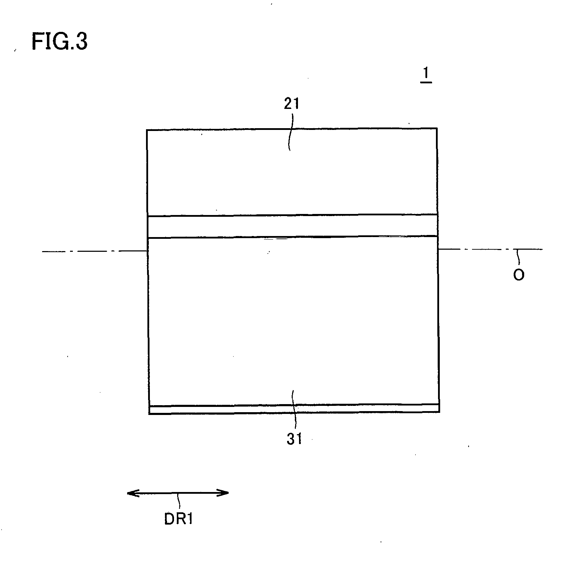

Fig. 1 is a perspective view showing a wire holder of a first embodiment. Fig. 2 is a front view of the wire holder shown in Fig. 1. Fig. 3 is a side view of the wire holder shown in Fig. 1. Specifically, Fig. 2 shows the wire holder when viewed in a direction of arrow II shown in Fig. 1. Fig. 3 shows the wire holder when viewed in a direction of arrow III shown in Fig. 1. Referring to Figs. 1-3, a configuration of wire holder 1 according to the first embodiment will be described.

As shown in Figs. 1-3, wire holder 1 has three wall portions 11, 21, 31. Wall portions 11, 21, 31 are formed rotationally symmetric to one another with respect to an axis O, which serves as a rotation center axis. Wall portions 11, 21, 31 are provided to project in directions orthogonal to axis O and extends in a direction DR1 along axis O. When wire holder 1 is viewed in cross section along a cross sectional line orthogonal to axis O, i.e., when wire holder 1 is viewed in direction DR1 as shown in Fig. 2, wall portions 11, 21, 31 are formed to have thick portions 12, 22, 32 relatively large in thickness, and thin portions 13, 23, 33 relatively small in thickness.

Wall portions 11, 21, 31 respectively have thick portions 12, 22, 32 at the sides of tip portions 14, 24, 34, which are portions distant away from axis O. Tip portions 14, 24, 34 are formed at end portions opposite to the sides of thick portions 12, 22, 32 connected to thin portions 13, 23, 33. Each of tip portions 14, 24, 34 is formed to have an arc shape in cross section. Each of tip portions 14, 24, 34 is formed to constitute a portion of a cylindrical surface. These three wall portions 11, 21, 31 are connected in one piece at a base 15 in the vicinity of axis O. Wall portions 11, 21, 31 have thin portions 13, 23, 33 at their sides adjacent to base 15.

Because wall portions 11, 21, 31 have thick portions 12, 22, 32 and thin portions 13, 23, 33, a recess 41 is formed between wall portions 11, 21 facing each other, a recess 51 is formed between wall portions 21, 31, and a recess 61 is formed between wall portions 31, 11. Specifically, wall portions 11, 21 are provided with recess 41 formed to be surrounded by thin portions 13, 23 across opposing surfaces of wall portion 11 and wall portion 21. Wall portions 21, 31 are provided with recess 51 formed to be surrounded by thin portions 23, 33 across opposing surfaces of wall portion 21 and wall portion 31. Wall portions 31, are provided with recess 61 formed to be surrounded by thin portions 33, 13 across opposing surfaces of wall portions 31 and wall portion 11.

Recesses 41, 51, 61 are formed at locations corresponding to thin portions 13, 23, 33 of wall portions 11, 21, 31. Wall portions 11, 21, 31 have portions depressed to form recesses 41, 51, 61, thereby forming thin portions 13, 23, 33 each thin in wall thickness. The wall thicknesses of wall portions 11, 21, 31 are relatively small at thin portions 13, 23, 33, thus forming recesses 41, 51, 61 by the depressed surfaces of wall portions 11, 21, 31.

Now, a feature in the shape of each of recesses 41, 51, 61 will be described with reference to Fig. 2. As shown in Fig. 2, recesses 41, 51, 61 have bottom surfaces constituted by arc portions 42, 52, 62 formed to have arc shapes in cross section, respectively. As shown in Fig. 2, when wire holder 1 is viewed in front or when wire holder 1 is viewed in cross section along the cross sectional line orthogonal to axis O and not shown in the figure, each of the bottom surfaces of recesses 41, 51, 61 is formed to have the arc shape. In the arc shape of arc portion 42, opening end portions 43, 44 form opposite ends thereof. Likewise, in the arc shape of arc portion 52, opening end portions 53, 54 form opposite ends thereof.

The length of a line segment connecting opening end portions 43, 44 opposite to each other in the cross section of recess 41 having the arc shape in cross section (i.e., a distance in a straight line between opening end portions 43, 44 that correspond to the opposite ends in the arc shape of arc portion 42) is regarded as a span length L of recess 41. Each of recesses 41, 51, 61 is formed such that span length L of recess 41 (51, 61) is equal to or greater than 85% of the diameter of each of wires to be held by wire holder 1. If span length L of each of recesses 41, 51, 61 is much smaller than the diameter of each of the wires, operation efficiency is decreased in fitting the wires into recesses 41, 51, 61. In view of this, by setting span length L of each of recesses 41, 51, 61 to be equal to or greater than 85% of the diameter of each wire, operation efficiency can be improved in bundling the plurality of wires.

On the other hand, if span length L of each of recesses 41, 51, 61 is too large, the positions of the wires in recesses 41, 51, 61 are not stabilized, resulting in difficulties in relative alignment of the wires to wire holder 1 upon bundling the wires. In view of this, by setting span length L of each of recesses 41, 51, 61 to be equal to or smaller than 115% of the diameter of each of the wires, the relative alignment of the wires can be done more efficiently upon bundling the plurality of wires.

Further, a point serving as the center of the arc shape of each of arc portions 42, 52, 62 is regarded as a central point C. Two line segments connecting central point C of the arc shape in recess 51 to opening end portions 53, 54, i.e., the two ends of arc portion 52 intersect with each other at central point C to form an angle, which is regarded as an "arc angle θ". Each of recesses 41, 51, 61 is formed to have an arc shape with arc angle θ not less than 150° and not more than 210° in recess 51 (41, 61).

If arc angle θ is too small, arc portions 42, 52, 62 have small surface areas facing the wires, which results in difficulties in relative alignment of the wires. On the other hand, if arc angle θ is too large, opening portions of recesses 41, 51, 61, i.e., portions exposed to outside become small, which results in difficulties in fitting the wires into recesses 41, 51, 61. In view of this, recesses 41, 51, 61 are formed such that arc portions 42, 52, 62, which constitute the bottom surfaces of recesses 41, 51, 61, have arc shapes with arc angle θ of not less than 150° and not more than 210°, thereby improving operation efficiency upon bundling the plurality of wires.

Now, a straight line (indicated by a chain double-dashed line in Fig. 2) is considered which connects central points C of the arc shapes of arc portions 42, 52 constituting the bottom surfaces of recesses 41, 61 adjacent to each other. This straight line intersects with wall portion 11. Adjacent to the opposite side surfaces of wall portion 11, recesses 41, 61 are formed. The straight line connecting respective central points C of arc portions 42, 52 cross thin portion 13 of wall portion 11. Wall portion 11 has a wall thickness t at its portion intersecting with the straight line. Further, arc portion 62 of recess 61 is formed to have an arc shape with a radius r. Wall portions 11, 21, 31 are formed to have wall thickness t equal to or smaller than 1/2 of radius r of the arc shape of arc portion 62 (42, 52).

As a distance between the plurality of wires held by wire holder 1 is smaller, the inductance of each wire can be reduced more. Hence, by setting wall thickness t at 1/2 of radius r or smaller, the inductance thereof can be reduced more effectively. On the other hand, if wall thickness t is too small, it becomes difficult to manufacture wire holder 1 and wire holder 1 is weakened in strength. Hence, the lower limit value for wall thickness t can be determined to be equal to or greater than 1/4 of radius r.

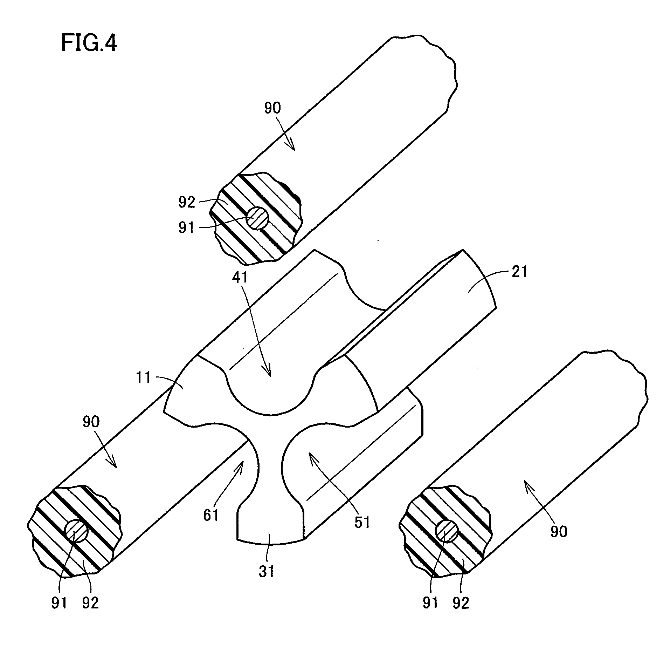

The following describes a method for bundling the plurality of wires using wire holder 1 configured as above. Each of Figs. 4-6 is a perspective view showing a process of bundling the wires using the wire holder. Each of wires 90 to be bundled is a coated wire, in which an insulating portion 92 having an annular shape in cross section is provided to cover the circumference of an elongated electrically conductive portion 91. Electrically conductive portion 91 is formed of a material having a high electric conductivity, such as a metal. Insulating portion 92 is formed of an insulating material such as a resin. Insulating portion 92 coats the circumference of electrically conductive portion 91.

Wire holder 1 of the first embodiment includes three wall portions 11, 21, 31. Each of the three recesses 41, 51, 61 for holding wires 90 is formed between two adjacent wall portions across the opposing surfaces of the two adjacent wall portions. Using such a wire holder 1, three wires 90 can be relatively aligned and can be bundled.

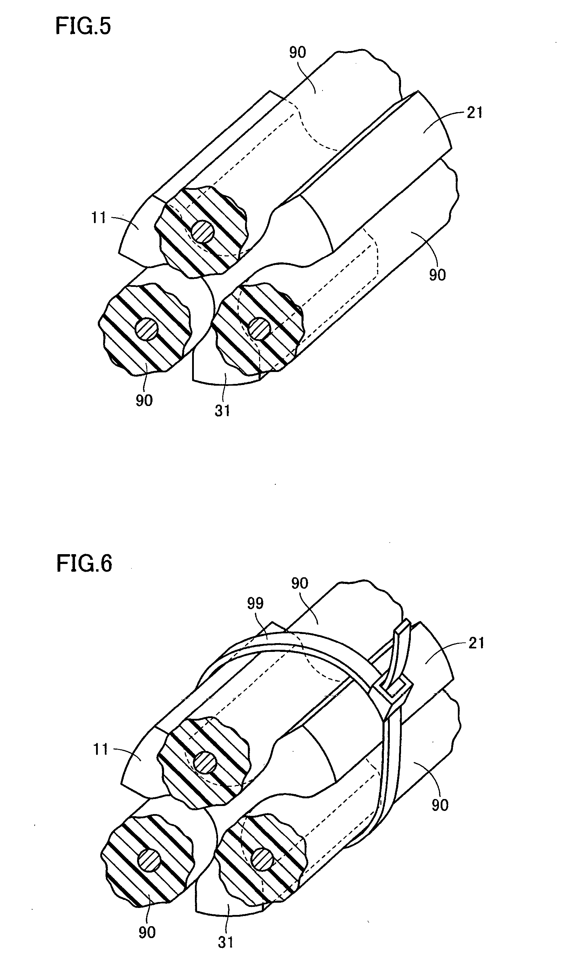

To bundle such three wires using wire holder 1, wire holder 1 and three wires 90 are first prepared as shown in Fig. 4. Next, as shown in Fig. 5, wires 90 are respectively fit into recesses 41, 51, 61. In doing so, wires 90 are placed therein along axis O, which is the rotation symmetry axis of wire holder 1. Each of wires 90 has a circular cross sectional shape, and insulating portion 92 thereof has a circular outer circumferential shape. Hence, wires 90 are contained in recesses 41, 51, 61 having, as their bottom surfaces, arc portions 42, 52, 62 having the arc shapes in cross section. Wires 90 are placed in recesses 41, 51, 61 with the circumferential surfaces of wires 90 respectively facing arc portions 42, 52, 62. In this way, wires 90 can be aligned relative to one another.

Next, as shown in Fig. 6, a band-shaped bundling device 99 such as a bundling band made of, for example, a resin is wound around wire holder 1 and the three wires respectively fit into recesses 41, 51, 61, thereby bundling wires 90. Bundling device 99 is provided to be wound around the circumference of wire holder 1 in contact with tip portions 14, 24, 34 of three wall portions 11, 21, 31. By bundling wires 90 using bundling device 99, wires 90 are fixed to wire holder 1, thereby obtaining a wire bundling structure shown in Fig. 6.

The wire bundling structure of the first embodiment shown in Fig. 6 includes: wire holder 1; three wires 90 fit into recesses 41, 51, 61 of wire holder 1; and band-shaped bundling device 99, provided to be wound around the circumference of wire holder 1 in contact with tip portions 14, 24, 34 of wall portions 11, 21, 31, for bundling wires 90. According to this wire bundling structure, wires 90 are fit into recesses 41, 51, 61 of wire holder 1 and are readily aligned relative to one another. This achieves improved operation efficiency in bundling wires 90, and reduces the number of process steps required in bundling.

Because band-shaped bundling device 99 bundles wires 90 in contact with tip portions 14, 24, 34 of wall portion 11, 21, 31, wires 90 can be bundled without damage, as with the conventional wire bundling structure for winding a glass tape around each wire. In the case of winding the glass tape around each wire, portions thereof to be bundled by bundling device 99 need to be aligned with one another in order to determine where to wind the glass tape. This requires skilled operators for the bundling to obtain a high-quality bundling structure. In contrast, in the wire bundling structure of the present embodiment, wires 90 can be aligned relative to one another readily by the simplified operation of putting wires 90 into recesses 41, 51, 61 of wire holder 1. Accordingly, irrespective of operators, uniformity in quality of the wire bundling structure can be improved.

Particularly important in the case of applying a voltage not less than 1 kV is reduction of the inductance of each wire to suppress a surge voltage. In particular, when applying a voltage of approximately 3 kV, corona may be generated, so it is essential to reduce the inductance of each wire. By bundling high-voltage wires using the wire bundling structure of the first embodiment, the high-voltage wires can be readily bundled in close proximity to one another, thereby readily reducing the surge voltage. Specifically, when wires 90 to be bundled are high-voltage wires to be fed with a voltage of not less than 1 kV, the wire bundling structure of the present embodiment can be used more suitably.

### (Second Embodiment)

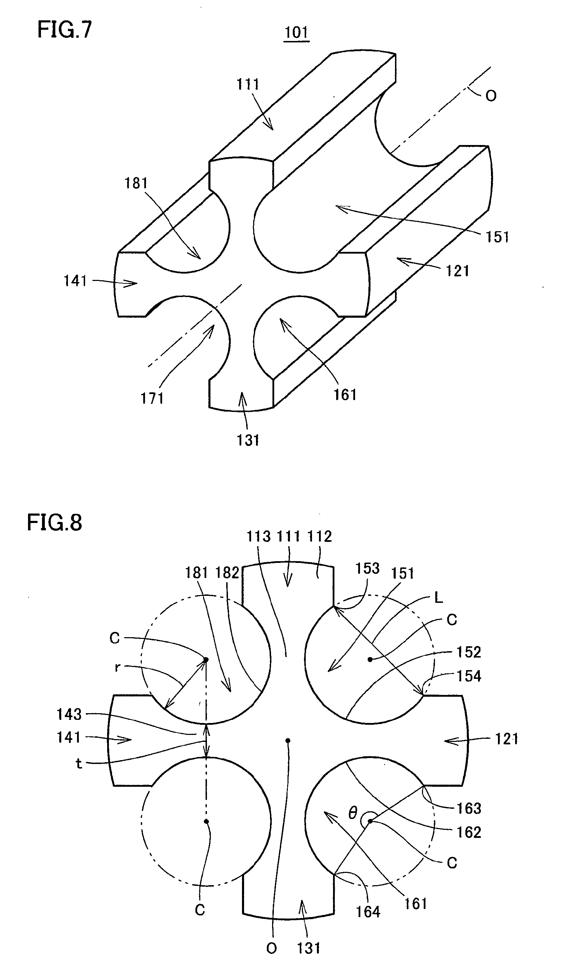

Fig. 7 is a perspective view showing a wire holder of a second embodiment. Fig. 8 is a front view of the wire holder shown in Fig. 7. Wire holder 101 of the second embodiment in Fig. 7 and Fig. 8 includes four wall portions 111, 121, 131, 141, and is capable of bundling four wires. In this point, wire holder 101 is different from wire holder 1 of the first embodiment for holding three wires.

As with the first embodiment, wall portions 111, 121, 131, 141 in the second embodiment are formed rotationally symmetric to one another, are provided to project in a direction orthogonal to an axis O, which serves as a rotation symmetry axis, and extends along axis O. Between wall portions 111, 121, 131, 141 facing one another, there are provided recesses 151, 161, 171, 181, each having an arc shape in cross section, for holding wires. Recesses 151, 161, 171, 181 have bottom surfaces formed by arc portions 152, 162, 172, 182 each having an arc shape.

Each of recesses 151, 161, 171, 181 has a span length L (i.e., a distance of a straight line between opening end portions 153, 154, which are the opposite ends in the arc shape of arc portion 152) equal to or greater than 85% of the diameter of each of the wires. Each of recesses 151, 161, 171, 181 is formed to have an arc shape in cross section with an arc angle θ of not less than 150° and not more than 210°, where arc angle θ is an angle formed by two line segments connecting a central point C of the arc shape in recess 161 to opening end portions 163, 164, which are the two ends in arc portion 162.

Wall portions 111, 121, 131, 141 have a wall thickness t equal to or smaller than 1/2 of a radius r of the arc shape of each of recesses 151, 161, 171, 181, at their portions intersecting with the straight line connecting central points C of the arc shapes of two adjacent ones of recesses 151, 161, 171, 181, such as thin portion 143 of wall portion 141.

By fitting a plurality of wires into recesses 151, 161, 171, 181 of wire holder 101 of the second embodiment and arranging them along axis O upon bundling the plurality of wires, the wires can be readily aligned relative to one another. This eliminates the operation of winding a glass tape around each one of the wires upon bundling the plurality of wires, thereby improving operation efficiency and reducing the number of process steps required in bundling the wires.

Although the embodiments of the present invention have been described, it should be considered that the embodiments disclosed herein are illustrative and nonrestrictive in any respect. The scope of the present invention is defined by the scope of claims, and is intended to include any modifications within the scope and meaning equivalent to the terms of the claims.

### INDUSTRIAL APPLICABILITY

A wire holder and a wire bundling structure of the present invention are advantageously applicable to, in particular, a holder for holding high-voltage wires used in a power converter or the like, as well as a bundling structure thereof

## Claims

1. A wire holder (1) for relative alignment of a plurality of wires (90) upon bundling said wires (90), comprising a plurality of wall portions (11, 21, 31) formed rotationally symmetric to one another, provided to project in a direction orthogonal to a rotation symmetry axis, and extending along said rotation symmetry axis,
between opposite ones of said wall portions (11, 21, 31), recesses (41, 51, 61) having arc shapes in cross section being formed to hold said wires (90),
each of said recesses (41, 51, 61) having a span length of not less than 85% of a diameter of each of said wires,
said wires (90) being able to be aligned by fitting said wires (90) into said recesses (41, 51, 61) and arranging said wires (90) along said rotation symmetry axis,
wherein each of said wall portions (11, 21, 31) has a wall thickness of not more than 1/2 of a radius of each of the arc shapes in said recesses (41, 51, 61), at its portion intersecting with a straight line connecting centers of the arc shapes of two adjacent ones of said recesses (41, 51, 61).

2. The wire holder (1) according to claim 1, wherein said recesses (41, 51, 61) are formed to have the arc shapes in cross section with an arc angle of not less than 150° and not more than 210°.

3. The wire holder (1) according to claim 1, wherein each of said wall portions (11, 21, 31) has a wall thickness of about 1/4 of a radius of each of the arc shapes in said recesses (41, 51, 61), at its portion intersecting with a straight line connecting centers of the arc shapes of two adjacent ones of said recesses (41, 51, 61).

4. A wire bundling structure comprising:
the wire holder (1) recited in any one of claims 1-3;
the plurality of wires (90) fit into said recesses (41, 51, 61); and
a band-shaped bundling device (99), provided to be wound around the wire holder (1) in contact with tip portions (14, 24, 34) of the plurality of wall portions (11, 21, 31), for bundling said wires (90).

## Patentansprüche

1. Drahthalter (1) zur relativen Ausrichtung einer Mehrzahl von Drähten (90) beim Bündeln der Drähte (90), umfassend eine Mehrzahl von Wandabschnitten (11, 21, 31), die rotationssymmetrisch zueinander gebildet sind, derart beschaffen sind, dass sie in einer Richtung orthogonal zu einer Rotationssymmetrieachse vorstehen und sich entlang der Rotationssymmetrieachse erstrecken,
wobei zwischen gegenüberliegenden Wandabschnitten (11, 21, 31) Aussparungen (41, 51, 61) mit bogenförmigen Querschnitten gebildet sind, um die Drähte (90) zu halten,
wobei jede der Aussparungen (41, 51, 61) eine Spannweite von nicht weniger als 85 % eines Durchmessers jedes der Drähte hat,
wobei die Drähte (90) ausgerichtet werden können, indem man die Drähte (90) in die Aussparungen (41, 51, 61) einpasst und die Drähte (90) entlang der Rotationssymmetrieachse anordnet,
wobei jeder der Wandabschnitte (11, 21, 31) eine Wanddicke von nicht mehr als ½ eines Radius jeder der Bogenformen in den Aussparungen (41, 51, 61) an seinem Abschnitt hat, der eine gerade Linie schneidet, welche Zentren der Bogenformen von zwei benachbarten Aussparungen (41, 51, 61) schneidet.

2. Drahthalter (1) nach Anspruch 1, wobei die Aussparungen (41, 51, 61) so gebildet sind, dass sie die bogenförmigen Querschnitte mit einem Bogenwinkel von nicht weniger als 150° und nicht mehr als 210°haben.

3. Drahthalter (1) nach Anspruch 1, wobei jeder der Wandabschnitte (11, 21, 31) eine Wanddicke von ungefähr ¼ eines Radius jeder der Bogenformen in den Aussparungen (41, 51, 61) an seinem Abschnitt hat, der eine gerade Linie schneidet, welche Zentren der Bogenformen von zwei benachbarten Aussparungen (41, 51, 61) schneidet.

4. Drahtbündelstruktur, umfassend:
den Drahthalter (1) nach einem der Ansprüche 1-3;
die Mehrzahl von Drähten (90), eingepasst in die Aussparungen (41, 51, 61); und
eine bandförmige Bündelungsvorrichtung (99), die dazu vorgesehen ist, um den Drahthalter (1) herum in Kontakt mit Spitzenabschnitten (14, 24, 34) der Mehrzahl von Wandabschnitten (11, 21, 31) zur Bündelung der Drähte (90) gewickelt zu werden.

## Revendications

1. Porte-fils (1) pour l'alignement relatif d'une pluralité de fils (90) par la mise en faisceau desdits fils (90), comprenant :
une pluralité de parties de parois (11, 21, 31) formées par symétrie de rotation et conçues pour se projeter dans une direction orthogonale à un axe de symétrie de rotation et s'étendant le long dudit axe de symétrie de rotation ;
des décrochements (41, 51, 61) placés entre des parties opposées desdites parties de parois (11, 21, 31) et offrant des formes d'arc en section transversale formées pour maintenir lesdits fils (90) ;
chacun desdits décrochements (41, 51, 61) ayant une longueur d'ouverture qui n'est pas inférieure à 85 % d'un diamètre de chacun desdits fils ;
lesdits fils (90) étant en mesure d'être alignés lorsqu'on place lesdits fils (90) dans lesdits décrochements (41, 51, 61) et que l'on dispose lesdits fils (90) le long dudit axe de symétrie de rotation ;
dans lequel chacune desdites parties de parois (11, 21, 31) offre une épaisseur de paroi qui n'est pas supérieure à un demi-rayon de chacune des formes d'arc desdits décrochements (41, 51, 61), dans sa partie qui coupe une droite connectant les centres des formes d'arc de deux décrochements adjacents parmi lesdits décrochements (41, 51, 61).

2. Porte-fils (1) selon la revendication 1, dans lequel lesdits décrochements (41, 51, 61) sont formés pour avoir les formes d'arc en section transversale, avec un angle d'arc qui n'est pas inférieur à 150 ° et pas supérieur à 210 °.

3. Porte-fils (1) selon la revendication 1, dans lequel chacune desdites parties de parois (11, 21, 31) a une épaisseur d'environ un quart de rayon de chacune des formes d'arc desdits décrochements (41, 51, 61), dans la partie qui coupe une droite connectant les centres des formes d'arc de deux décrochements adjacents parmi lesdits décrochements (41, 51, 61).

4. Structure de faisceau de câbles comprenant :
le porte-fils (1) selon l'une quelconque des revendications 1 à 3 ;
la pluralité de fils (90) placés dans lesdits décrochements (41, 51, 61) ; et
un dispositif de mise en faisceau en forme de ruban (99) prévu pour être enroulé autour du porte-fils (1) en contact avec les parties sommitales (14, 24, 34) de la pluralité de parties de parois (11, 21, 31), afin de mettre lesdits fils (90) en faisceau.
